# EUROPÄISCHE PATENTANMELDUNG

(11) **EP 2 796 251 A2**
(43) Veröffentlichungstag der Anmeldung: **29.10.2014**
(21) Anmeldenummer: 14165850.0
(22) Anmeldetag: 24.04.2014
(51) Int. Cl.: B26D 1/25, B26D 5/00, B26D 7/12

(54) **Lebensmittelaufschneidemesser mit einem Funktransponder**

(30) Priorität: 26.04.2013 DE 102013007275
(71) Anmelder: Weber Maschinenbau GmbH Breidenbach, 35236 Breidenbach (DE)
(72) Erfinder: Weber, Günther, 17094 Groß Nemerow (DE)
(74) Vertreter: Grünecker, Kinkeldey, Stockmair & Schwanhäusser

(57) **Zusammenfassung**

Die vorliegende Erfindung bezieht sich auf ein Verfahren zum Einsatz eines Messers (1) für eine Lebensmittelaufschneidevorrichtung (3), wobei das Messer (1) einen Funktransponder (11) aufweist, der in Antwort auf ein Abfragefunksignal einen Antwortdatensatz in einem Antwortfunksignal versendet. Weiterhin wird ein Konfigurationssignal mit einem Statusdatensatz versendet. Das Konfigurationssignal wird durch den Funktransponder (11) empfangen und der Statusdatensatz wird im Funktransponder (11) gespeichert. Die vorliegende Erfindung bezieht sich weiterhin auf ein Messer zum Aufschneiden von Lebensmittelprodukten in einer Lebensmittelaufschneidevorrichtung (3), wobei das Messer (1) insbesondere ein Kreismesser oder Sichelmesser ist, und wobei das Messer (1) einen Funktransponder (11) umfasst, der in einer Vertiefung (10) in dem Messer (1) eingebettet ist. Im inneren Bereich der Vertiefung (10) ist eine Aufnahme (12) vorgesehen, wobei der Funktransponder (11) wenigstens teilweise in der Aufnahme (12) angeordnet ist, und wobei die Vertiefung (10) in dem an ihre Öffnung grenzenden Bereich einen größeren Querschnitt aufweist als die Aufnahme (12).

## Beschreibung

Die vorliegende Erfindung bezieht sich auf ein Verfahren zum Einsatz eines Messers für eine Lebensmittelaufschneidevorrichtung, wobei das Messer einen Funktransponder aufweist, der in Antwort auf ein Abfragefunksignal einen Antwortdatensatz in einem Antwortfunksignal versendet. Die Erfindung bezieht sich weiterhin auf ein Messer zum Aufschneiden von Lebensmitteln in einer Lebensmittelaufschneidevorrichtung, wobei das Messer insbesondere ein Kreismesser oder Sichelmesser ist, und wobei das Messer einen Funktransponder umfasst, der in einer Vertiefung in dem Messer eingebettet ist.

In Lebensmittelaufschneidevorrichtungen, insbesondere Slicern, kommen aufgrund steigender Maschinenleistungen zunehmend komplexe Schneidmesser zum Einsatz. Derartige Schneidmesser sind vornehmlich als Sichel- oder Kreismesser ausgebildet, und können eine Vielzahl von unterschiedlichen Eigenschaften oder Gestaltungen aufweisen. So können die Schneidmesser aus verschiedenen Materialien aufgebaut sein, beschichtet sein, und unterschiedliche Schliffbilder aufweisen, beispielsweise eine Schnittkante mit oder ohne zusätzlich aufgebrachten Schneidzacken. Weiterhin können auch bereichsweise an der Schneidkante der Messer unterschiedliche Schneidengeometrien vorgesehen sein.

Die Schneidmesser werden zum Aufschneiden von Lebensmittelstangen, beispielsweise Käsestangen, Wurststangen oder Schinkenstangen eingesetzt, oder aber auch zum Aufschneiden von natürlich geformten Lebensmittelprodukten, wie beispielsweise Schinken.

In Abhängigkeit des aufzuschneidenden Lebensmittelproduktes kann sich in modernen Aufschneidervorrichtungen, die eine sehr hohe Schneidgeschwindigkeit aufweisen, die Notwendigkeit ergeben, dass das Messer oft nachgeschliffen werden muss, um die notwendige Schärfe aufzuweisen, damit die gewünschte Schnittqualität erreicht wird. Insbesondere bei abrasiv wirkenden Lebensmittelprodukten, wie beispielsweise Pfeffersalami, kann sich sogar die Notwendigkeit des Nachschleifens mehrmals am Tage ergeben.

Im Stand der Technik ist es aus der DE 10 2007 050 858 A1 bekannt, dass bei einer Vorrichtung zum Aufschneiden eines Lebensmittelproduktes, Bauteile, und dabei insbesondere auch Schneidmesser, eine eindeutig identifizierende Kodierung aufweisen, wobei aus der detektierten Kodierung ermittelbar ist, ob das Bauteil in Übereinstimmung mit dem ausgewählten Schneidprogramm montiert wurde. Dabei können die Kodierungen durch RFID-Funktransponders bereitgestellt werden, welche an den Bauteilen angebracht sind oder in diese eingebettet sind.

Es ist die Aufgabe der vorliegenden Erfindung ein Verfahren zum Einsatz eines Messer für Lebensmittelaufschneidevorrichtungen und ein Messer zum Aufschneiden von Lebensmittelprodukten in einer derartigen Lebensmittelaufschneidevorrichtung bereitzustellen, die die Bereitstellung von messerspezifischen Daten für die Lebensmittelaufschneidevorrichtung verbessern.

Die Erfindung stellt ein Verfahren zum Einsatz eines Messers für eine Lebensmittelaufschneidevorrichtung bereit, wobei das Messer einen Funktransponder aufweist, der in Antwort auf ein Abfragefunksignal einen Antwortdatensatz in einem Antwortfunksignal versendet, wobei das Verfahren die folgenden Schritte aufweist. Ein Konfigurationssignal mit einem Statusdatensatz wird versendet, das Konfigurationssignal wird durch den Funktransponder empfangen, und der Statusdatensatz wird im Funktransponder gespeichert.

Dabei wird das Konfigurationssignal insbesondere durch eine Sende- und Empfangseinheit an der Lebensmittelaufschneidevorrichtung oder einer Messerschleifvorrichtung versendet.

Bei dem Funktransponder handelt es sich insbesondere um einen RFID-Transponder (Radio Frequency Identification-Transponder). Der Funktransponder kann passiv ausgestaltet sein, d.h. die Energieversorgung erfolgt ausschließlich durch ein elektromagnetisches Feld dem der Funktransponder ausgesetzt wird. Dieses elektromagnetische Feld kann insbesondere durch das Konfigurationssignal oder das Abfragefunksignal bereitgestellt werden. Das Antwortfunksignal wird insbesondere durch eine Modulation des elektromagnetischen Feldes des Abfragefunksignals versendet.

Weiterhin kann der RFID-Transponder auch semiaktiv oder aktiv ausgestaltet sein, d.h. eine eigene Energiequelle, z.B. in Form einer Batterie aufweisen. Bei einem aktiven RFID-Transponder kann die Energiequelle für das Erzeugen des modulierten Rücksignals verwendet werden. Bei einem semiaktiven RFID-Transponder wird die Energiequelle dahingegen nur für die Versorgung eines Mikroprozessors im Funktransponder verwendet, wohingegen das Antwortfunksignal lediglich durch Modulation des Abfragefunksignals versendet wird.

Das Abfragefunksignal ist ein Signal, das von einer Sende- und Empfangseinheit an den Funktransponder des Messers gesendet wird. Die Sende- und Empfangseinheit ist insbesondere an der Lebensmittelaufschneidevorrichtung oder an einer Messerschleifvorrichtung vorgesehen und mit deren Steuerung verbunden.

Das Abfragefunksignal kann lediglich aus einem unmodulierten elektromagnetischen Feld einer bestimmten Frequenz bestehen, woraufhin der Funktransponder das elektromagnetische Feld des Abfragefunksignals moduliert, um das Antwortfunksignal zu versenden, das daraufhin von der Sende- und Empfangseinheit empfangen und ausgewertet wird. Das Antwortfunksignal umfasst dann vorteilhafterweise einen Antwortdatensatz mit sämtlichen relevanten Daten, die im Funktransponder gespeichert sind. In anderen Ausführungsformen kann das Abfragefunksignal zusätzlich zum elektromagnetischen Feld bereits eine Modulation aufweisen oder ein separates Funksignal einer anderen Frequenz als das bereitgestellte elektromagnetische Feld sein. Dadurch kann mit dem Abfragefunksignal ein Abfragedatensatz an den Funktransponder gesendet werden, sodass spezifische Informationen vom Funktransponder abgefragt werden können, und so der Antwortdatensatz nur die gewünschten Informationen enthält. Damit kann Kommunikation effizienter und somit schneller erfolgen.

Das Konfigurationssignal dient zum Verändern der gespeicherten Daten im Funktransponder.

Der Statusdatensatz umfasst insbesondere spezifische Daten der Lebensmittelaufschneidevorrichtung oder des Messers. So kann der Statusdatensatz Daten bezüglich des Betriebs der Lebensmittelaufschneidevorrichtung mit einem bestimmten Messer aufweisen, so z. B. die Standzeit oder die Umdrehungen des Messers im Schneidbetrieb. Weiterhin kann der Statusdatensatz Informationen bezüglich der Art des durch das Messer aufgeschnittenen Produkts enthalten. Zusammenfassend kann der Statusdatensatz somit Daten zur Messereinsatzhistorie aufweisen. Weiterhin kann der Statusdatensatz auch Daten bezüglich der Lebensmittelaufschneidevorrichtung aufweisen, wie bspw. den Typ oder die Seriennummer, wodurch insbesondere für Kundendienstanwendungen der Einsatz des Messers besser nachvollzogen werden kann. Weiterhin kann der Statusdatensatz insbesondere schleifspezifische Daten umfassen, die im Rahmen eines Schleifvorgangs von der Messerschleifvorrichtung an das Messer übertragen werden, und dort im Funktransponder gespeichert werden.

Vorteilhafterweise umfasst der Antwortdatensatz wenigstens Teile des Statusdatensatzes. Dadurch kann die Lebensmittelaufschneidevorrichtung oder die Messerschleifvorrichtung auf Daten zugreifen, die zu einem früheren Zeitpunkt z. B. von der Lebensmittelaufschneidevorrichtung oder der Messerschleifvorrichtung im Funktransponder gespeichert wurden. Insbesondere kann eine Anpassung des Betriebs an die entsprechenden Daten des Statusdatensatzes erfolgen.

Insbesondere ist das Abfragefunksignal in einem Frequenzbereich von 3 MHz bis 1 GHz, vorteilhafterweise in einem Bereich von 10 bis 20 MHz. Bspw. kann das Abfragefunksignal eine Frequenz von 13,56 MHz aufweisen. In vorteilhaften Ausführungsformen ermöglichen diese Frequenzen eine Übertragung von Daten über eine freie Strecke von wenigstens einem Meter.

Vorteilhafterweise wird das Konfigurationssignal durch eine Lebensmittelaufschneidvorrichtung versendet, und der Statusdatensatz umfasst die aktuelle Betriebszeit des Messers. Somit wird kontinuierlich während eines Aufschneidevorgangs, am Ende eines Aufschneidevorgangs oder beim Wechseln des Messers jeweils die aktuelle Betriebszeit des Messers im Funktransponder gespeichert oder zu einer akkumulierten Betriebszeit addiert. Die Betriebszeit des Messers kann dann jeweils von einer Lebensmittelaufschneidevorrichtung oder einer Messerschleifvorrichtung ausgelesen werden, und auf den Betrieb der jeweiligen Vorrichtung Einfluss nehmen. Insbesondere kann eine Benachrichtigung erfolgen, dass ein erneutes Schleifen des Messers notwendig ist, oder dass das Messer einer Inspektion bedarf. Vorteilhafterweise kann die aktuelle Betriebszeit des Messers nach dem Schleifen des Messers in einer Messerschleifvorrichtung durch ein Konfigurationssignal zurückgesetzt werden.

In einer Ausführungsform wird das Konfigurationssignal durch eine Messerschleifvorrichtung versendet, und der Statusdatensatz umfasst die Anzahl der Schleifzyklen des Messers. Damit kann bestimmt werden, ob das Messer noch einem weiteren Schleifzyklus unterzogen werden kann, und ob eine weitere Verwendung des Messers in der Lebensmittelaufschneidevorrichtung noch möglich ist. Dies ermöglicht, dass Messer bis zum Ende ihrer Lebensdauer verwendet werden können, die dann aber sicher erkannt wird.

Wenn die Vorderseite und Rückseite des Messers gesondert geschliffen werden, kann zusätzlich zu der vorangehend erwähnten Anzahl der Schleifzyklen, auch die Anzahl der Schleifzyklen auf der Rückseite des Messers in einem Statusdatensatz an den Funktransponder übertragen werden und im Funktransponder gespeichert werden.

In einer Ausführungsform umfasst der Statusdatensatz einen Zustandsparameter eines Messers. Dieser Zustandsparameter ist insbesondere nutzungsabhängig. Der Zustandsparameter kann insbesondere über Sensoren an der Messerschleifvorrichtung oder durch Auslesen von Parametern der Steuereinrichtung der Messerschleifvorrichtung, wie z. B. die Position der Schleif- oder Abrichtscheibe der Messerschleifvorrichtung, bestimmt werden. Bspw. ist ein Zustandsparameter des Messers der verbleibende abschleifbare Radius des Messers, der nach jedem Schleifvorgang aktualisiert im Funktransponder gespeichert wird. Damit kann genau bestimmt werden, ob das Messer noch nachgeschliffen werden kann, oder ob das Messer durch ein neues Messer ersetzt werden muss.

Vorteilhafterweise umfasst der Antwortdatensatz eine messerspezifische Information bezüglich des Schleifvorgangs, insbesondere die vorgesehene Schleifgeschwindigkeit bzw. Drehzahl der Schleifscheiben, oder die Drehzahl der Abrichtscheibe. Diese Informationen können in einem ausschließlich lesbaren Speicher im Funktransponder gespeichert werden, da sie sich gewöhnlich nicht über die Betriebszeit des Messers ändern. In anderen Ausführungsformen des Verfahrens ist es aber auch denkbar, diese Informationen mittels des Konfigurationssignals Statusdatensatz an den Funktransponder zu übertragen. Zudem kann sich die messerspezifische Information bezüglich des Schleifvorgangs in Abhängigkeit der Zustandsparameter des Messers ändern.

Weitere Werte, die vorteilhafterweise in einem ausschließlich lesbaren Speicher im Funktransponder gespeichert werden, und mit dem Antwortdatensatz auslesbar sind, sind Informationen bezüglich der Identifikation von Originalprodukten, die Information, ob das Messer multiwinkelfähig ist, die Artikelnummer des Messers, die Seriennummer des Messers und das Fertigungsdatum des Messers.

Informationen, die vornehmlich mit dem Konfigurationssignal in einem Statusdatensatz an den Funktransponder übertragen werden und im Funktransponder jeweils aktualisiert gespeichert werden, sind bspw. die Maschinennummer der Maschine, an der das Messer zuletzt verwendet wurde, oder die Programmnummer des Programms, mit dem das Messer zuletzt verwendet wurde. Diese Informationen sind insbesondere nützlich bei der Fehlerdiagnose durch den Kundendienst.

In einer Ausführungsform umfasst der Antwortdatensatz Informationen zur Geometrie zur Schneide des Messers. Diese Informationen können insbesondere den Schleifwinkel und die strukturelle Ausbildung der Klinge, wie bspw. eine gezackte, gewellte Struktur, umfassen. Insbesondere beim Einsatz von Multiwinkelmessern, d.h. Messer, die abstandsweise unterschiedliche Schneidengeometrien aufweisen, können die Schleifwinkel für die jeweiligen Bereiche, sowie die Bereichsangaben über den Umlaufwinkel im Funktransponder gespeichert sein. Diese Information bezüglich der Multiwinkelmesser kann in einem ausschließlich lesbaren Speicher des Funktransponders gespeichert sein, kann in anderen Ausführungsformen aber auch mittels des Konfigurationssignals in einem Statusdatensatz an den Funktransponder übertragen werden und im Funktransponder gespeichert werden. Die letztere Variante ist insbesondere vorteilhaft, wenn die Schleifwinkel oder die Bereiche des Multiwinkelmessers verändert werden sollen. Insbesondere können bis zu vier Schneidbereiche mit unterschiedlichen Schleifwinkeln vorgesehen werden.

Schließlich kann auch noch ein Parameter bezüglich der Radiuskorrektur des Schneidmessers im Funktransponder gespeichert werden.

In einer Ausführungsform wird das Antwortfunksignal durch eine Lebensmittelaufschneidevorrichtung empfangen, und der Betrieb der Lebensmittelaufschneidevorrichtung wird in Abhängigkeit des Antwortdatensatzes gesteuert. Insbesondere kann die maximale Rotationsgeschwindigkeit des Messers oder die maximale Vorschubgeschwindigkeit des aufzuschneidenden Lebensmittelsprodukts durch die Parameter des Antwortdatensatzes begrenzt werden. Weiterhin kann bspw. der Betrieb der Lebensmittelaufschneidevorrichtung beendet werden, wenn das Messer seine maximale Standzeit erreicht hat, bzw. wenn es nachgeschliffen werden muss.

In einer weiteren Ausführungsform kann das Antwortfunksignal durch eine Messerschleifvorrichtung empfangen werden, wobei der Betrieb der Messerschleifvorrichtung in Abhängigkeit des Antwortdatensatzes gesteuert wird. Insbesondere kann die Messerschleifvorrichtung die messerspezifische Information bezüglich des Schleifvorgangs auslesen, und entsprechend die Schleifgeschwindigkeit bzw. die Drehzahl der Schleifscheibe oder die Drehzahl der Abrichtscheibe anpassen. Zudem kann der Messerschleifvorgang auch in Abhängigkeit der im Antwortdatensatz enthaltenen Parameter zur Geometrie der Schneide des Messers ausgeführt werden, und so die gewünschte Klingengeometrie geschliffen werden, so z. B. eine Multischneide. Weiterhin kann die Schleifvorrichtung bestimmen, ob ein weiteres Schleifen des Messers hinsichtlich des verbleibenden abschleifbaren Radius, der Anzahl der Schleifzyklen des Messers, oder anderer Zustandsparameter des Messers überhaupt noch durchgeführt werden kann.

Insbesondere kann das Antwortsignal eine Sicherheitsinformation enthalten, die in Kombination mit einer Eingabe an der Messerschleifvorrichtung oder der Lebensmittelaufschneidevorrichtung durch eine Bedienperson, einen Betrieb der jeweiligen Vorrichtungen ermöglicht oder verhindert. Dadurch, dass die Authentifizierung in Abhängigkeit von dem jeweiligen Messer erfolgt, kann mit höherer Sicherheit eine Fehlbedienung verhindert werden. Insbesondere kann vorgesehen werden, dass nur Kundendienstmitarbeiter die zu schleifende Schneidengeometrie verändern können oder ein Messer außerhalb des vorgesehenen Bereichs schleifen können.

Weiterhin kann im Funktransponder ein Schleifprogramm gespeichert sein, das insbesondere mittels des Statusdatensatzes in den Funktransponder übertragen wurde, und dass nach dem Aufspannen des Messers in der Messerschleifvorrichtung mittels des Antwortfunksignals ausgelesen wird, und ein automatisches Schleifen des Messers ermöglicht. Somit kann eine Fehlbedienung verhindert werden. Das Schleifprogramm kann lediglich aus der Angabe eines Schleifwinkels bestehen, kann aber auch ein vollständiges Programm mit Bearbeitungszeit Winkelbereichen in Umfangsrichtung des Messers, abzutragenden Radien, und/oder Schneidenstrukturen sein.

Die Erfindung stellt weiterhin ein Messer zum Aufschneiden von Lebensmittelprodukten in einer Lebensmittelaufschneidevorrichtung bereit, wobei das Messer insbesondere ein Kreismesser oder Sichelmesser ist, und wobei das Messer einen Funktransponder umfasst, der in einer Vertiefung in dem Messer eingebettet ist, wobei im inneren Bereich der Vertiefung eine Aufnahme vorgesehen ist, wobei der Funktransponder wenigstens bereichsweise in der Aufnahme angeordnet ist, und wobei die Vertiefung in dem an ihre Öffnung grenzenden Bereich einen größeren Querschnitt aufweist als die Aufnahme. Die Aufnahme ermöglicht somit eine sichere Lagerung des Funktransponders, wohingegen der größere Querschnitt im Öffnungsbereich der Vertiefung die Funkkommunikation zwischen dem Funktransponder und einer Sende- und Empfangseinheit, insbesondere in einer Lebensmittelaufschneidevorrichtung oder in einer Messerschleifvorrichtung, verbessert. Insbesondere ermöglicht die derart ausgestaltete Vertiefung, dass die Funksignale nicht durch das aus Metall bestehende Messer abgeschwächt oder blockiert werden, bevor sie den Funktransponder erreichen oder bevor sie ausgehend vom Funktransponder die Sende- und Empfangseinheit erreichen.

Die Vertiefung ist insbesondere ein Sackloch, vornehmlich ausgestaltet als gestufte Sacklochbohrung.

Der in das Messer eingelassene Funktransponder ist insbesondere ein RFID-Transponder. Der Funktransponder dient insbesondere zur Erkennung des Messers durch die Lebensmittelaufschneidevorrichtung oder durch eine Messerschleifvorrichtung. Zusätzlich zu gewöhnlich ausschließlich lesbar gespeicherten Daten, wie beispielsweise Verifikationsdaten bezüglich eines Originalprodukts, Artikelnummern, Seriennummern oder das Datum der Fertigung kann der Funktransponder auch Daten zur Messerqualität und protokollierte Daten aus der Messerhistorie bezüglich der Bearbeitung und Nachbearbeitung, sowie Einsatzdaten bezüglich des Einsatzes des Messers auf der Lebensmittelaufschneidevorrichtung speichern sowie bereitstellen.

Insbesondere entspricht die Aufnahme in ihrem Querschnitt dem Querschnitt des Funktransponders. Somit kann ein passgenaues Einsetzen des Funktransponders in die Aufnahme erfolgen, so dass eine Vibration oder ein Verrutschen des Funktransponders auch bei den hohen Fliehkräften im Betrieb des Messers ausgeschlossen werden kann. Der Funktransponder kann bereichsweise über die Aufnahme überstehen. Dies kann die Qualität der Funkverbindung zum Funktransponder verbessern, insbesondere wenn im überstehenden Bereich die Antenne des Funktransponders angeordnet ist. Der vorgenannte Querschnitt des Funktransponders bezieht sich auf den Querschnitt des Bereichs des Funktransponders der in der Aufnahme angeordnet ist. Der Funktransponder ist dennoch vorteilhafterweise ganz in der Vertiefung angeordnet.

Vorteilhafterweise wird die Vertiefung durch eine Vergussmasse aufgefüllt, die den Funktransponder abdeckt. Dies ermöglicht eine sichere Befestigung des Funktransponders in der Vertiefung, wobei die Vergussmasse dennoch im Vergleich zum Metallmaterial des Messers eine verlässliche Funkkommunikation zwischen dem Funktransponder und der maschinenseitigen Sende- und Empfangseinheit ermöglicht. Insbesondere ist die Vergussmasse ein Gießharz. Dieses Gießharz besteht vorteilhafterweise aus zwei Komponenten. Das Gießharz zeigt wenig oder keinen Volumenschwund bei der Aushärtung. Zudem kann es vorteilhaft sein, eine langsame Aushärtung der Vergussmasse vorzusehen, damit nicht unfreiwillig eine frühzeitige Festlegung des Funktransponders im Messer erfolgt. Das heißt die Aushärtung kann beispielsweise mindestens 15 Minuten erfordern. Weiterhin ist die Vergussmasse zumindest für den vorübergehenden Lebensmittelkontakt zugelassen. Die Vergussmasse kann die Vertiefung plan mit der Messeroberfläche ausfüllen, alternativ aber auch leicht über die Messeroberfläche vorstehen oder leicht bezüglich der Messeroberfläche zurückgesetzt sein. Um eine einfache Reinigbarkeit des Messers zu ermöglichen, ist es vorteilhaft, wenn bei vorstehender oder rückgesetzter Vergussmasse ein konvexes beziehungsweise konkaves Profil der Vergussmasse vorgesehen wird.

Vorteilhafterweise weist die Vertiefung einen Hinterschnitt auf. Das heißt die Vertiefung weitet sich zumindest bereichsweise in ihrer Tiefenrichtung gesehen auf. Insbesondere ist der Hinterschnitt in dem an die Öffnung grenzenden Bereich der Vertiefung vorgesehen. Allerdings kann der Hinterschnitt auch im inneren Bereich der Vertiefung vorgesehen sein, wobei jedenfalls kein Hinterschnitt im Bereich der Aufnahme vorgesehen sein sollte, um ein passgenaues Einsetzen des Funktransponders zu ermöglichen.

Der Hinterschnitt ermöglicht, dass die Vergussmasse, die den Funktransponder abdeckt, nach dem Erhärten nicht aus der Vertiefung fallen kann, wodurch der Funktransponder unlösbar im Messer vorgesehen ist. Damit kann der Funktransponder insbesondere nicht zerstörungsfrei aus dem Messer entfernt werden, was auch die Fälschungssicherheit des Messers erhöht.

Die Vergussmasse ist insbesondere ein nicht-metallisches Bindemittel. Die Vergussmasse kann wenigstens teilweise durch eine Kleb- und Dichtmasse gebildet werden, die den Funktransponder vollständig überdeckt. Damit können die Hygieneanforderungen bezüglich des Messers erfüllt werden, da sich keine Verschmutzungen im Bereich der Vertiefung im Messer ansammeln können. Die Vergussmasse ist insbesondere reinigungsmittelresistent. Anstelle des Einsatzes einer Vergussmasse kann der Funktransponder auch lediglich in der Aufnahme verklebt sein.

Insbesondere wird die Vertiefung durch ein Sackloch ausgehend von einer Vorder- oder Rückseite des Messers gebildet.

Der Hinterschnitt weist insbesondere eine Hinterschneidung von wenigstens 1°, vorteilhafterweise von wenigstens 3° auf. Dieser Winkel für die Hinterschneidung ermöglicht eine sichere Befestigung der Vergussmasse und damit des Funktransponders in der Vertiefung im Messer.

Insbesondere weist das Messer einen Einspannbereich auf, der in Kontakt mit einem Messerkopf kommt, und einen geschliffenen Schneidenbereich, wobei die Vertiefung zwischen diesen Bereichen vorgesehen ist. In einer Ausführungsform hat der Messerkopf einen Radius von wenigstens 150 mm, vorteilhafterweise wenigstens 165 mm. Bei kleineren eingesetzten Messern beginnt der Bereich der Schneide bei einem Radius von 180 mm. Folglich wird der Funktransponder vornehmlich zwischen den beiden vorangehenden Radien im Messer vorgesehen, das heißt insbesondere zwischen 150 mm Radius und 180 mm Radius, vorteilhafterweise zwischen 165 mm Radius und 180 mm Radius und insbesondere bei einem Radius von 177 mm in einem konkreten Ausführungsbeispiel. Vorteilhafterweise wird der Funktransponder bei mehreren verschiedenen Messern immer an derselben Stelle positioniert, damit eine entsprechende Positionierung der Sende- und Empfangseinheit an den zugeordneten Lebensmittelaufschneidevorrichtungen oder Messerschleifvorrichtungen möglich ist. Der Messerkopf kann sowohl in einer Lebensmittelaufschneidevorrichtung als auch in einer Messerschleifvorrichtung vorgesehen sein. Die Sende- und Empfangseinheit wird vorteilhafterweise ruhend außerhalb des rotierenden Messerkopfes am Antriebsgehäuse des Messerantriebs montiert.

In einer Ausführungsform ist das Messer als Sichelmesser ausgeführt, und der Funktransponder ist in Umfangsrichtung 160° bis 200°, vorteilhafterweise ungefähr 180°, ausgehend vom Ende der Schneide angeordnet. Eine Anordnung in einem höheren Umfangswinkelbereich ist nicht vorteilhaft, da dann der plane Bereich des Messer verlassen würde, da in diesem Anfangsbereich der Schneide eines Sichelmessers geringere Radien vorgesehen sind. In einem geringeren Winkelbereich ist eine Anordnung nicht vorteilhaft, da dort Ausfräsungen im Messern zur Gewichtsreduzierung vorgesehen sind, die ein Anordnen der Vertiefung des Funktransponders erschweren.

Weiterhin ist das Messer insbesondere mit Befestigungsbohrungen versehen, insbesondere vier Befestigungsbohrungen. Vorteilhafterweise ist der Funktransponder mittig zwischen wenigstens zwei Befestigungsbohrungen angeordnet. Damit wird die Stabilität des Messers durch die zusätzliche Vertiefung am wenigsten beeinflusst.

Insbesondere wird das Messer immer in die selbe Position gedreht, bevor eine Funkverbindung von der Lebensmittelaufschneidevorrichtung oder der Messerschleifvorrichtung zu dem Funktransponder aufgenommen wird. Dementsprechend ist die Erfindung auch auf eine Vielzahl von Messern gerichtet, bei denen jeweils der Funktransponder immer an der gleichen Position angeordnet ist, so dass unabhängig von Messertyp oder -größe immer eine Kommunikation bei einer definierten Verdrehung des Messers erreicht werden kann. Insbesondere wird das Messer für zwei bis drei Sekunden in der vorbestimmten Position gehalten, um die Funkkommunikation mit dem Funktransponder zu ermöglichen.

Der Funktransponder kann insbesondere wenigstens teilweise aus Glas geformt sein, so dass er nicht zerstörungsfrei entfernbar ist, selbst wenn die eventuell vorgesehene Vergussmasse entfernt würde.

Der Hinterschnitt kann sich auch vorteilhaft auf die Funkverbindung zum Funktransponder auswirken, beispielsweise in dem das Funksignal am Hinterschnitt hin zum Funktransponder reflektiert wird.

In manchen Ausführungsbeispielen ist auch eine Kommunikation bei rotierendem Messer möglich. Dies wird insbesondere durch die aufgeweitete Vertiefung ermöglicht, so dass selbst dann eine Funkverbindung mit dem Funktransponder möglich ist, wenn der Funktransponder durch die Rotation des Messers auf der gegenüberliegenden Seite des Messerkopfes angeordnet ist. Allerdings wird eine Kommunikation mit dem Funktransponder bei stillstehendem Messer bevorzugt. In anderen Ausführungsformen kann wenigstens die Antenne der Sende- und Empfangseinheit am Messerkopf vorgesehen sein und mit diesem rotieren. Somit ist die Kommunikation mit dem rotierenden Messer ermöglicht.

Die Erfindung stellt weiterhin eine Lebensmittelaufschneidevorrichtung mit einer Sende- und Empfangseinheit zur Kommunikation mit einem erfindungsgemäßen Messer wie vorangehend beschrieben oder nach einem erfindungsgemäßen Verfahren wie vorangehend beschrieben bereit. Bei der Lebensmittelaufschneidevorrichtung handelt es sich insbesondere um einen Slicer, in dem ein oder mehrere Messerköpfe vorgesehen sind, wobei pro Messerkopf jeweils ein erfindungsgemäßes Messer vorgesehen wird. Weiterhin ist pro Messer vorteilhafterweise eine Sende- und Empfangseinheit vorgesehen, die jeweils mit dem Funktransponder des erfindungsgemäßen Messers kommuniziert. Der vom Messer durch die Sende- und Empfangseinheit der Lebensmittelaufschneidevorrichtung empfangene Antwortdatensatz kann insbesondere Informationen enthalten, die den Beginn eines Aufschnittvorgangs freigeben. Dabei kann es sich insbesondere um die Präsenz eines Messers, um die Verifikation, dass das Messer ein Originalbauteil ist, oder um eine Überprüfung von notwendigen Statusparametern des Messers, wie beispielsweise Messerschärfe, Betriebszeit, usw. handeln. Weiterhin kann am Ende eines Aufschneidevorgangs Information mittels des Konfigurationssignals zum Funktransponder übertragen werden und darin gespeichert werden. Somit kann die Einsatzhistorie des Messers im Funktransponder gespeichert werden, so dass beim Einsatz des Messers auf der gleichen Lebensmittelaufschneidevorrichtung oder einer anderen Lebensmittelaufschneidevorrichtung überprüft werden kann, ob das Messer noch zum weiteren Einsatz geeignet ist, ob es nachgeschliffen werden muss, oder das Ende seiner Einsatzfähigkeit bereits erreicht hat.

Die Erfindung stellt weiterhin eine Messerschleifvorrichtung mit einer Sende- und Empfangseinheit zur Kommunikation mit einem erfindungsgemäßen Messer wie vorangehend beschrieben oder nach einem erfindungsgemäßen Verfahren wie vorangehend beschrieben bereit. Insbesondere kann die Messerschleifvorrichtung die Präsenz eines Messers durch die Kommunikation mit dem Messer bestimmen, kann messerspezifische Informationen auslesen und den Schleifvorgang entsprechend anpassen, oder kann die Messerhistorie des Messers ermitteln, um zu bestimmen wie und ob das Messer weiter geschliffen werden kann.

Die Erfindung wird im Folgenden anhand von beispielhaften Ausführungsformen beschrieben, die in den folgenden Figuren dargestellt sind:
- Figur 1: zeigt eine Draufsicht auf eine erfindungsgemäße Ausführungsform eines Messers für eine Lebensmittelaufschneidevorrichtung.
- Figur 2: zeigt die seitliche Schnittansicht A-A eines Bereichs der erfindungsgemäßen Ausführungsform des Schneidmessers gemäß Figur 1.
- Figur 3: zeigt eine erfindungsgemäße Ausführungsform einer Lebensmittelaufschneidevorrichtung mit einem erfindungsgemäßen Messer.
- Figur 4: zeigt eine schematische Seitenansicht einer erfindungsgemäßen Ausführungsform einer Messerschleifvorrichtung mit einem erfindungsgemäßen Messer.

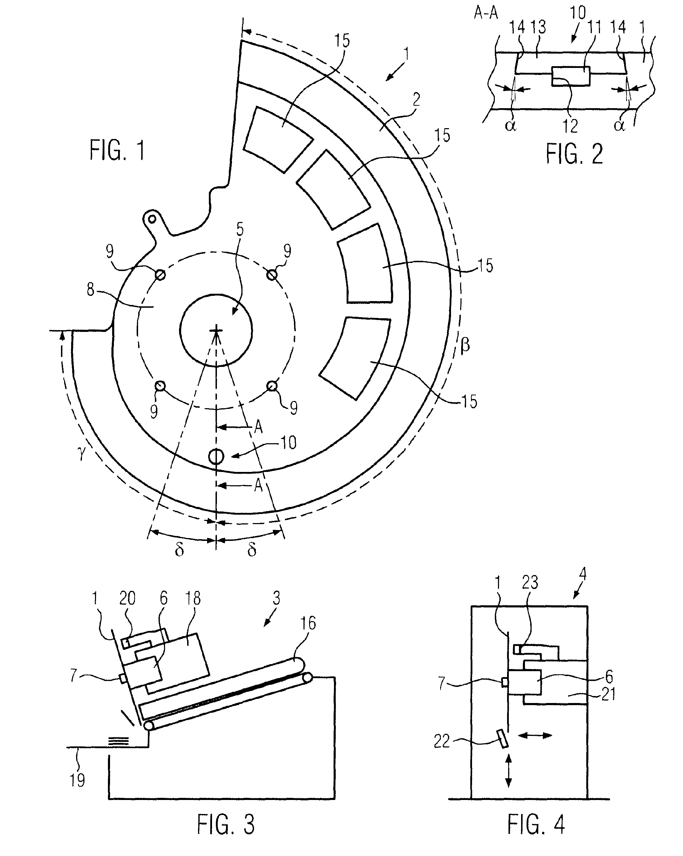

In Figur 1 ist eine erfindungsgemäße Ausführungsform eines Messers für eine Lebensmittelaufschneidevorrichtung dargestellt, wobei es sich bei diesem Messer 1 um ein Sichelmesser handelt. Das Sichelmesser 1 weist eine Schneide 2 auf, die sich über einen Teilbereich des Umfangs erstreckt, wobei der Schneidenradius im Uhrzeigersinn gesehen und in der vorgesehenen Drehrichtung abnimmt. Wird das Messer 1 nun in einer Lebensmittelaufschneidevorrichtung 3, wie beispielsweise in Figur 3 dargestellt, oder in einer Messerschleifvorrichtung 4, wie beispielsweise in Figur 4 dargestellt, im Uhrzeigersinn gedreht, so nimmt der Radius der Schneide 2 ortsfest betrachtet jeweils periodisch kontinuierlich zu. Dadurch wird ein gleichmäßiges Eindringen der Schneide 2 in ein aufzuschneidendes Lebensmittelprodukt ermöglicht. Das Messer weist eine Aufnahmeöffnung 5 auf, mit der es auf einem Messerkopf 6 befestigt werden kann, wobei insbesondere ein vorspringender Lagerzylinder 7 am Messerkopf 6 vorgesehen ist, der im Wesentlichen in seinem Durchmesser dem Durchmesser der Aufnahmeöffnung 5 entspricht und durch die Aufnahmeöffnung 5 durchgeführt wird.

Um die Aufnahmeöffnung 5 weist das Messer 1 einen plangeschliffenen Bereich 8 auf, der in Anlage mit einer Anlagefläche des Messerkopfes 6 kommt. Im oder wie dargestellt am Rand des plangeschliffenen Bereichs 8 sind Befestigungsbohrungen 9 insbesondere in regelmäßigen Abständen in der Umfangsrichtung vorgesehen. Durch diese Befestigungsbohrungen 9 werden Schrauben geführt, die das Messer 1 auf dem Messerkopf 6 befestigen. Mittig zwischen zwei Befestigungsbohrungen 9 ist eine Vertiefung 10 in Form eines gestuften Sacklochs vorgesehen.

Die Vertiefung 10 dient zur Befestigung eines Funktransponders 11 im Messer 1, wie in mehr Detail in der Schnittansicht in Figur 2 dargestellt ist. Dafür ist mittig in der im Wesentlichen zylindrischen Vertiefung 10 eine Aufnahme 12 vorgesehen, die in ihrem Querschnitt an den Querschnitt des Funktransponders 11 angepasst ist. Der Funktransponder 11 ist insbesondere ein RFID-Transponder mit einem beschreibbaren Speicher.
Wenn der Funktransponder 11 im Wesentlichten zylindrisch ausgeführt ist, ist die Aufnahme ein entsprechend zylindrisch ausgeformtes Sackloch am Boden der Vertiefung 10. Dadurch dass der Querschnitt der Aufnahme 12 geringer ist als der Querschnitt der Vertiefung 10 wird eine Funkverbindung zum Funktransponder nicht durch die metallischen Bereiche des Messers gestört. Nachdem der Funktransponder 11 in die Aufnahme 12 eingesetzt wurde, wird die Vertiefung 10 mit einer Vergussmasse 13 in Form eines Gießharzes aufgefüllt, das aushärtet und somit den Funktransponder im Messer befestigt. Um ein Herausfallen oder Lösen der Vergussmasse 13 zu verhindern, ist in der Seitenwand der Vertiefung 10 ein Hinterschnitt 14 vorgesehen. Der Hinterschnitt 14 weist einen Winkel α von wenigstens 1 Grad und vorteilhaft davon wenigstens 3 Grad bezüglich der Tiefenrichtung der Vertiefung 10 auf. Alternativ kann der Hinterschnitt 14 auch durch ein gezacktes Profil an der Seitenwand der Vertiefung oder eine umlaufende Nut in der Seitenwand der Vertiefung 10 ausgeprägt sein.

In Figur 1 ist die Vertiefung 10 in einem Winkel ß von ungefähr 180 Grad vom Ende der Schneide 2 angeordnet, wobei die gesamte Schneide 2 sich über ungefähr 270 Grad des Messerumfangs erstreckt. Somit ist die Vertiefung 10 in einem Winkel γ von ungefähr 90 Grad vom Anfang der Schneide 2 angeordnet. Allerdings kann die Position der Vertiefung in manchen Ausführungsformen um einen Winkel von δ von maximal 20 Grad in Richtung des Endes oder des Anfangs der Schneide 2 verschoben werden. Auch in diesem Bereich ist eine vorteilhafte Ausformung der Vertiefung 10 möglich. Dagegen ist in den weiter abgelegenen Bereichen eine Anordnung der Vertiefung 10 oft schwieriger, da entweder Ausfräsungen 15 zur Gewichtsreduzierung des Messers 1 vorgesehen sein können, oder der Bereich zwischen Schneide 2 und dem plangeschliffenen Bereich 8 zu gering ist. Insbesondere wird die Vertiefung außerhalb des plangeschliffenen Bereichs 8 für den Messerkopf 6 angeordnet, damit der Messerkopf die Vertiefung 10 nicht verdeckt.

In Figur 3 ist eine Lebensmittelaufschneidevorrichtung 3 mit einem Messer 1 gemäß Figur 1 dargestellt. Die Lebensmittelaufschneidevorrichtung dient zum Aufschneiden eines Lebensmittelproduktes 16, das auf einem Vorschubmittel 17, insbesondere in Form eines Transportbandes, zu dem rotierenden Messer 1 zugeführt wird. Das Messer 1 ist, wie bereits beschrieben, an einem Messerkopf 6 befestigt, der mittels eines Antriebs 18 rotiert wird. Weiterhin ist nach der Lebensmittelaufschneidevorrichtung 3 eine Ablage 19 vorgesehen, auf das durch das Messer 1 abgeschnittene Scheiben oder Stücke des Lebensmittelproduktes abgelegt werden, insbesondere gestapelt werden.

An der Lebensmittelaufschneidevorrichtung 3 ist stationär eine Sende- und Empfangseinheit 20 vorgesehen. Wenn der Funktransponder 11 ausgelesen werden soll, wird das Messer 1 so verdreht, dass die Vertiefung 10 auf die Sende- und Empfangseinheit 20 ausgerichtet ist, wobei die Vertiefung 10 in der der Sende- und Empfangseinheit 20 zugewandten Seite des Messers 1 vorgesehen ist. Der Kommunikationsvorgang mit dem Funktransponder 11 erfolgt in ca. 2-3 Sekunden, dann kann das Messer 1 wieder verdreht werden bzw. aus der Lebensmittelaufschneidevorrichtung 3 entnommen werden.

Insbesondere wird nach jedem Schneidevorgang der Schneidevorrichtung 3 die aktualisierte Betriebsinformation des Messers 1 in einem Statusdatensatz zusammengefasst und mittels eines Konfigurationssignals von der Sende- und Empfangseinheit 20 der Lebensmittelaufschneidevorrichtung zu dem Funktransponder 11 des Messers 1 gesendet und im Funktransponder 11 gespeichert.

Wird das Messer 1 in der Lebensmittelaufschneidevorrichtung 3 ersetzt, sendet die Sende- und Empfangseinheit 20 ein Abfragefunksignal zum Funktransponder 11, der dieses mit einem Antwortfunksignal beantwortet, dass einen Antwortdatensatz umfasst. Dieser Antwortdatensatz kann insbesondere messerspezifische Informationen enthalten, die auf den Betrieb der Lebensmittelaufschneidevorrichtung Einfluss nehmen.

Insbesondere kann die Lebensmittelaufschneidevorrichtung somit bestimmen, ob das Messer 1 für gewünschten Einsatz geeignet ist, und wann ein Nachschärfen des Messers erfolgen muss.

Das Nachschärfen des Messers erfolgt in einer Messerschleifvorrichtung 4, die schematisch in Figur 4 dargestellt ist. Die Messerschleifvorrichtung 4 umfasst ebenfalls einen entsprechenden Messerkopf 6 an dem das Messer mittels Befestigungsschrauben, die in den Befestigungsbohrungen 9 vorgesehen sind, befestigt wird. Die Messerschleifvorrichtung 4 weist ebenfalls einen Antrieb 21 auf, der das Messer 1 in Rotation versetzen kann. Weiterhin weist die Messerschleifvorrichtung ein Schleifelement 22 auf, mit dem ein Nachschleifen des Messers 1 bewirkt wird. Das Schleifelement 22 kann positioniert und/oder verdreht werden, um die gewünschte Schneidengeometrie zu erreichen. Insbesondere kann es sich bei dem Schleifelement 22 um eine Schleifscheibe handeln. Zusätzlich zum Schleifelement kann auch ein nicht dargestelltes Abrichtelement vorgesehen sein.

Die Messerschleifvorrichtung 4 weist ebenfalls eine stationär vorgesehene Sende- und Empfangseinheit 23 auf, die zur Kommunikation mit dem Funktransponder 11 ausgelegt ist. So kann nach Einsetzen des Messers 1 in die Messerschleifvorrichtung 4 der Funktransponder 11 ausgelesen werden, um die notwendigen Parameter für das Schleifen des Messers 1 zu ermitteln, und die Messerschleifvorrichtung 4 entsprechend zu steuern. Insbesondere kann in dem Funktransponder 11 ein gesamtes Schleifprogramm gespeichert sein, mit Daten zu den jeweiligen Positionen des Schleifelements 22 für die jeweiligen Bereiche der Messerschneide 2. Alternativ kann lediglich der Typ des Messers 1 im Funktransponder 11 gespeichert sein und durch die Sende- und Empfangseinheit 23 ausgelesen werden, und die Messerschleifvorrichtung hält Informationen bezüglich den entsprechenden Schleifparametern bereit, bzw. lädt diese aus einem Netzwerk herunter. Erfindungsgemäß wird durch die Sende- und Empfangseinheit 23 ein Konfigurationssignal mit einem Statusdatensatz an den Funktransponder 11 übertragen, und in dem Funktransponder 11 gespeichert. Dies geschieht insbesondere am Ende des Schleifvorgangs. Damit kann bspw. gespeichert werden, wie viele Schleifvorgänge an dem Messer bereits durchgeführt wurden, oder wie viel des Radius des Messers bereits bei Schleifvorgängen abgeschliffen wurde. Dies ermöglicht eine Bestimmung der Reststandzeit des Messers 1.

Die erfindungsgemäß geformte Vertiefung 10 ermöglicht dabei, dass die Ausrichtung des Messers 1 bezüglich der Sende- und Empfangseinheit 20, 23 nicht übermäßig genau sein muss, da auch bei leicht versetzter Anordnung eine Kommunikation mit dem Funktransponder 11 erfolgen kann. In manchen Ausführungsformen ist es sogar möglich, dass keinerlei Ausrichtung zwischen dem Funktransponder 11 und der Sende- und Empfangseinheit 20, 23 erfolgen muss, da eine Funkkommunikation zwischen der Sende- und Empfangseinheit 20, 23 und dem Funktransponder 11 aufgrund der aufgeweitet geformten Vertiefung 10 unabhängig von der Verdrehstellung des Messers 1 möglich ist.

In manchen Ausführungsformen ist die Sende- und Empfangseinheit 20, 23 in Radialrichtung des Messers verschieblich. Damit kann die Sende- und Empfangseinheit 20, 23 jeweils für verschiedene Positionen des Funktransponders 11 in verschiedenen Messern verschoben werden. In manchen Ausführungsformen ist ein automatisiertes Verschieben der Sende- und Empfangseinheit 20, 23 möglich, sodass automatisch die Position des Funktransponders 11 zunächst bestimmt werden kann, und dann die Sende- und Empfangseinheit 20, 23 entsprechend verschoben werden kann.

Nachdem das Messer 1 in die Messerschleifvorrichtung 4 eingesetzt wurde, kann das Messer insbesondere automatisch so verdreht werden, dass die Vertiefung 10 auf die Sende- und Empfangseinheit 23 ausgerichtet ist. Alternativ kann das Messer 1 initial in einer solchen Position in die Messerschleifvorrichtung 4 eingesetzt werden, dass die Vertiefung 10 und die Sende- und Empfangseinheit 23 aufeinander ausgerichtet sind. Dann sendet die Sende- und Empfangeinrichtung 23 ein Abfragefunksignal an den Funktransponder 11, der mit einem Antwortfunksignal antwortet, das einen Antwortdatensatz enthält, der insbesondere Teile eines Statusdatensatzes umfassen kann, der vorangehend an den Funktransponder 11 übertragen wurde und im Funktransponder 11 gespeichert wurde. Insbesondere kann der Antwortdatensatz Informationen zur Messergeometrie, wie bspw. Durchmesser oder Schneidengeometrie, umfassen. Weiter kann der Antwortdatensatz Daten zur Schleifhistorie aufweisen, bspw. wie oft das Messer geschliffen wurde, oder die aktuellen Schleifradius des Messers. Dies ist gemeinhin Teil des Statusdatensatzes, der in einer Messerschleifvorrichtung 4 an den Funktransponder 11 übertragen wurde. Weiterhin kann der Antwortdatensatz Informationen dazu aufweisen, inwieweit das Messer für bestimmte Lebensmittelprodukte, die geschnitten werden sollen, geeignet ist.

Der Antwortdatensatz kann weiterhin Daten bezüglich der Betriebdauer, entweder insgesamt oder seit dem letzten Schleifen des Messers enthalten. Dies stellt gewöhnlich einen Teil des Statusdatensatzes dar, der in der Lebensmittelaufschneid- und Messerschleifvorrichtung an den Funktransponder 11 übertragen werden. Weiterhin kann der Antwortdatensatz Informationen zur zulässigen Drehzahl aufweisen. Schließlich kann der Antwortdatensatz auch Informationen bezüglich der bereits mit dem Messer geschnittenen Mengen an Lebensmittelprodukten, entweder insgesamt oder seit dem letzten Schleifen des Messers umfassen. Die Menge kann insbesondere durch das Gewicht des geschnittenen Lebensmittelproduktes oder durch die Anzahl der Scheiben des geschnittenen Lebensmittelproduktes angegeben werden. Dazu können auch noch produktspezifische Informationen gespeichert werden, dass die Abrasionsseigenschaften des Lebensmittelprodukts bei der möglichen Betriebsdauer des Messers berücksichtigt werden können. Die Angaben über die geschnittene Menge des Lebensmittelproduktes sind Teil eines Statusdatensatzes der nach dem Aufschneiden eines Lebensmittelproduktes oder vor dem Entnehmen eines Messers aus der Lebensmittelaufschneidevorrichtung mit einem Konfigurationssignal von der Sende- und Empfangseinheit an den Funktransponder 11 im Messer übertragen werden können.

## Patentansprüche

1. Verfahren zum Einsatz eines Messers (1) für eine Lebensmittelaufschneidevorrichtung (3), wobei das Messer (1) einen Funktransponder (11) aufweist, der in Antwort auf ein Abfragefunksignal einen Antwortdatensatz in einem Antwortfunksignal versendet, mit den Schritten:
Versenden eines Konfigurationssignals mit einem Statusdatensatz,
Empfangen des Konfigurationssignals durch den Funktransponder (11), und
Speichern des Statusdatensatzes im Funktransponder (11).

2. Verfahren nach Anspruch 1, wobei der Antwortdatensatz wenigstens Teile des Statusdatensatzes umfasst.

3. Verfahren nach Anspruch 1 oder 2, wobei das Abfragefunksignal in einem Frequenzbereich von 3 MHz bis 1 GHz ist.

4. Verfahren nach einem der vorangehenden Ansprüche, wobei das Konfigurationssignal durch eine Lebensmittelaufschneidevorrichtung (3) versendet wird, und der Statusdatensatz die aktuelle Betriebszeit des Messers (1) umfasst.

5. Verfahren nach einem der vorangehenden Ansprüche, wobei das Konfigurationssignal durch eine Messerschleifvorrichtung (4) versendet wird, und der Statusdatensatz die Anzahl der Schleifzyklen des Messers (1) umfasst.

6. Verfahren nach einem der vorangehenden Ansprüche, wobei das Konfigurationssignal durch eine Messerschleifvorrichtung (3) versendet wird, und der Statusdatensatz einen Zustandsparameter des Messers (1) umfasst.

7. Verfahren nach einem der vorangehenden Ansprüche, wobei der Antwortdatensatz eine messerspezifische Information bezüglich des Schleifvorgangs umfasst, insbesondere die vorgesehene Schleifgeschwindigkeit bzw. Drehzahl der Schleifscheibe, oder die Drehzahl der Abrichtscheibe.

8. Verfahren nach einem der vorangehenden Ansprüche, wobei der Antwortdatensatz Informationen zur Geometrie der Schneide (2) des Messers (1) umfasst.

9. Verfahren nach einem der vorangehenden Ansprüche, wobei das Antwortfunksignal durch eine Lebensmittelaufschneidevorrichtung (3) empfangen wird, und der Betrieb der Lebensmittelaufschneidevorrichtung (3) in Abhängigkeit des Antwortdatensatzes gesteuert wird.

10. Verfahren nach einem der vorangehenden Ansprüche, wobei das Antwortfunksignal durch eine Messerschleifvorrichtung (4) empfangen wird, und der Betrieb der Messerschleifvorrichtung (4) in Abhängigkeit des Antwortdatensatzes gesteuert wird.

11. Messer zum Aufschneiden von Lebensmittelprodukten in einer Lebensmittelaufschneidevorrichtung (3), wobei das Messer (1) insbesondere ein Kreismesser oder Sichelmesser ist, und wobei das Messer (1) einen Funktransponder (11) umfasst, der in einer Vertiefung (10) in dem Messer (1) eingebettet ist,
**dadurch gekennzeichnet, dass**
im inneren Bereich der Vertiefung (10) eine Aufnahme (12) vorgesehen ist, wobei der Funktransponder (11) wenigstens teilweise in der Aufnahme (12) angeordnet ist, und wobei die Vertiefung (10) in dem an ihre Öffnung grenzenden Bereich einen größeren Querschnitt aufweist als die Aufnahme (12).

12. Messer nach Anspruch 11, wobei die Vertiefung (10) durch eine Vergussmasse (13) aufgefüllt ist, die den Funktransponder (11) abdeckt.

13. Messer nach einem der Ansprüche 11 bis 12, wobei das Messer (1) einen Einspannbereich (8), der in Kontakt mit einem Messerkopf (6) kommt, und einen geschliffenen Schneidenbereich aufweist, und die Vertiefung zwischen diesen Bereichen (8,2) vorgesehen ist.

14. Lebensmittelaufschneidevorrichtung (3) mit einer Sende- und Empfangseinheit (20) zur Kommunikation mit einem Messer (1) gemäß einem der Ansprüche 11 bis 13 oder nach einem Verfahren gemäß einem der Ansprüche 1 bis 10.

15. Messerschleifvorrichtung (4) mit einer Sende- und Empfangseinheit (23) zur Kommunikation mit einem Messer (1) gemäß einem der Ansprüche 11 bis 13 oder nach einem Verfahren gemäß einem der Ansprüche 1 bis 10.
